# EUROPEAN PATENT SPECIFICATION

(11) **EP 0 311 691 B1**
(45) Date of publication and mention of the grant of the patent: **04.08.1993**
(21) Application number: 88902944.3
(22) Date of filing: 31.03.1988
(51) Int. Cl.: G11B 7/00, G11B 20/10

(54) **OPTICAL RECORDING/REPRODUCING APPARATUS**
OPTISCHE SPEICHER-/WIEDERGABEANORDNUNG
APPAREILS D'ENREGISTREMENT/REPRODUCTION OPTIQUE

(30) Priority: 31.03.1987 JP 80319/87
(43) Date of publication of application: 19.04.1989
(73) Proprietor: SONY CORPORATION, Tokyo 141 (JP)
(72) Inventor: OGAWA, Hiroshi, Shinagawa-ku Tokyo 141 (JP)
(74) Representative: Ayers, Martyn Lewis Stanley
(86) International application number: JP8800332
(87) International publication number: WO8807742

(56) References cited:
- EP-A- 0 144 813
- FR-A- 2 517 103
- FR-A- 2 581 470
- JP-A- 5 298 508
- JP-A-50 123 318
- JP-A-58 161 111
- JP-U- 0 553 465

## Description

### TECHNICAL FIELD

The present invention relates to an optical recording apparatus that can be suitably adapted to a magneto-optical disc apparatus or the like which records data on, for example, a magneto-optical disc or reproduces data therefrom.

### BACKGROUND ART

So far magneto-optical discs have been known as a recording medium of large capacity on which data are rewritable.

In a magneto-optical disc apparatus for recording data on the magneto-optical disc or reproducing data therefrom, a a clock signal for reading data recorded on the disc is formed by sampling a high frequency signal derived from a photo-detector used to detect, for example, a servo pit formed on the magneto-optical disc by a sampling pulse.

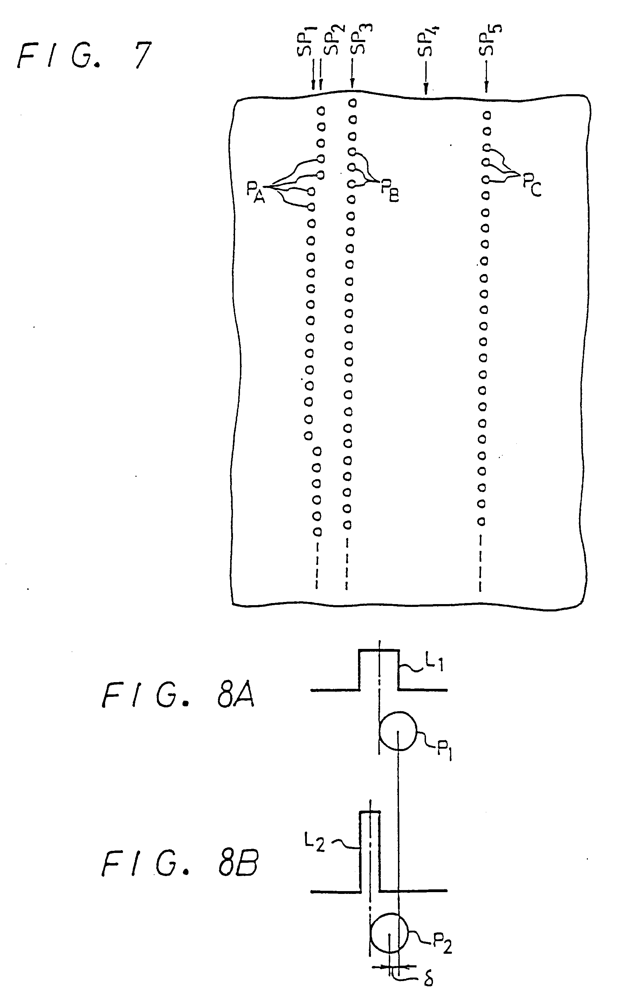

In the above-mentioned magneto-optical disc apparatus, a timing (phase) at which the high frequency signal from the photo-detector is sampled is displaced due to the scattering of the elements, their temperature characteristic or the like. For example, a signal is recorded on the magneto-optical disc by a laser light. In this case, a signal recorded portion formed by the laser light is positionally displaced dependent on the outputted state of the laser light. Fig. 8 is a diagram illustrating different positions at which the signal recorded portions are formed. Between a case when a laser light of relatively low intensity is irradiated for a long time period in response to a pulse signal L₁ shown in Fig. 8A and a case when a laser light of relatively high intensity is irradiated for a short time period in response to a pulse signal L₂ shown in Fig. 8B, although the laser outputs are substantially the same, recorded portions P₁ and P₂ formed by the respective laser lights are formed from the centers of the irradiated portions so that they are displaced from each other by δ.

The displacement between the sampling timings directly leads to the displacement between a data read clock signal and recorded data. There is then a risk that an error will frequently occur in reading, for example, the recorded data.

FR-A-2581 470 discloses recording a second synchronizing signal with the recorded data in addition to the pre-recorded synchronizing signal and then holding synchronization to that second synchronizing signal during retrieval of the recorded data.

In view of the above-mentioned aspect, it is an object of the present invention to provide an optical recording/reproducing apparatus which can always produce a data read clock signal of an optimum timing.

According to the present invention there is provided an optical recording/reproducing apparatus for use with a recording medium on which a synchronizing signal is recorded in advance in first areas (2a) and an auxiliary synchronizing signal may be recorded in second areas of the recording medium by the same recording means which records data between said synchronizing signals characterised by a clock generator whose clock signal is locked to said synchronizing signal and delay means for adjusting the phase of said clock signal on the basis of said auxiliary synchronizing signal read from the second areas to generate a data read clock signal.

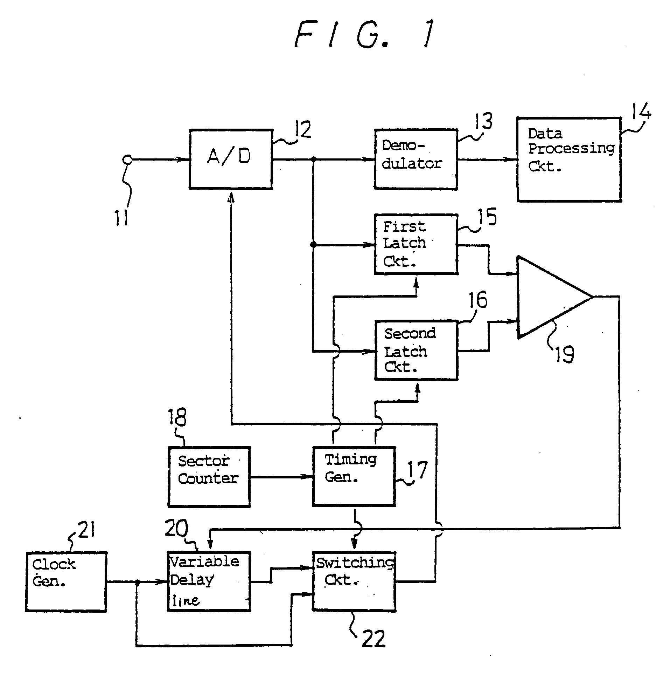

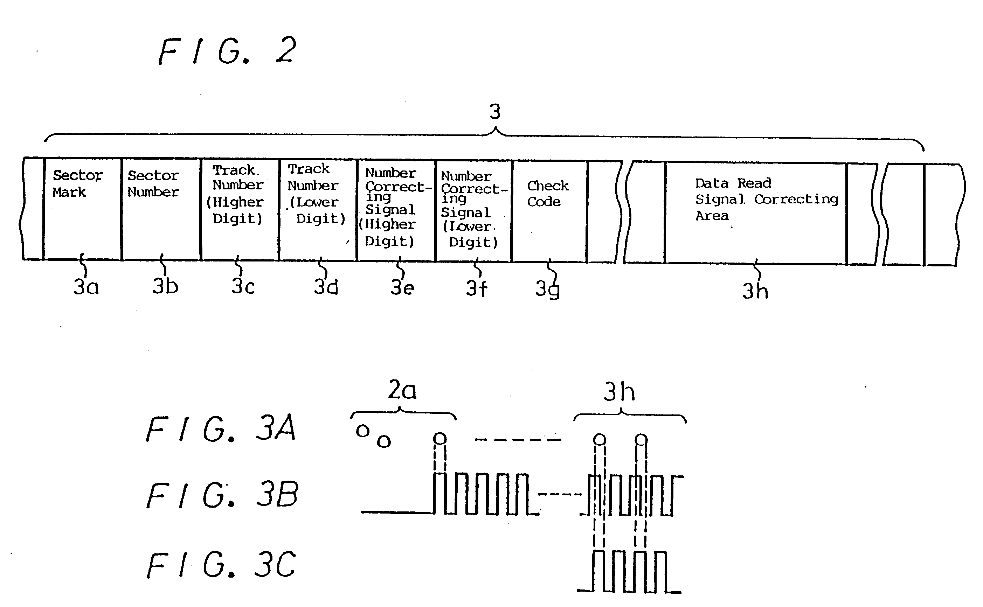

Fig. 1 is a structural diagram showing an embodiment of a main portion of an optical recording/reproducing apparatus according to the present invention, Figs. 2, 4, 5, 6 and 7 are diagrams showing an arrangement of a recording medium used in the circuit of the example shown in Fig. 1, respectively, Fig. 3 is a diagram showing the phase control condition by the circuit shown in the example of Fig. 1 and Fig. 8 is a diagram showing such a state that pits are formed.

### BEST MODE FOR CARRYING OUT THE INVENTION

An embodiment of an optical recording/reproducing apparatus according to the present invention will hereinafter be described with reference to the attached drawings. In this embodiment, the present invention is applied to a magneto-optical disc apparatus. Accordingly, a format of a magneto-optical disc in this embodiment will be described first.

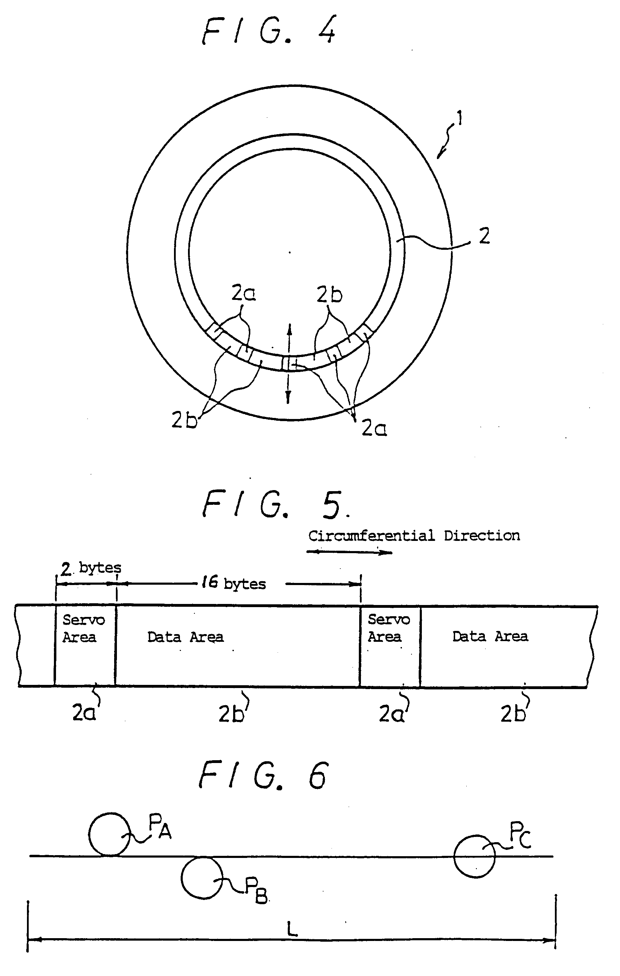

Fig. 4 schematically illustrates a recorded pattern of a magneto-optical disc in this embodiment.

Referring to Fig. 4, a magneto-optical disc 1 is about, for example, 13 cm in diameter and has a storage capacity of more than 300 M bytes on its single side. This disc 1 is rotated at a constant angular velocity and records data by, for example, concentrically forming a track 2 where one track is formed per revolution. The track number on the single side thereof amounts to, for example, 18000 to 20000 and each track is divided to provide, in this embodiment, 32 sectors.

As shown in Fig. 5 in an enlarged-scale, each track is formed of a servo area 2a on which a servo pit (synchronizing signal) is formed in advance and a data area 2b on which data is to be written by a laser light. These servo area and data area are alternately formed along the circumferential direction of each track. Changing the lengths of the servo area 2a and the data area 2b into bytes, the servo area 2a, for example, is formed of 2 bytes and the data area 2b is formed of 16 bytes. In this embodiment, each of the servo area 2a and data area 2b is provided in one track by 1376 and one track is separated into 32 sectors as mentioned above, whereby one sector includes each of the servo areas 2a and data areas 2b by 43. The data area 2b at the beginning of each sector is assigned as an address area 3. This address area 3 is such an area on which a sector number, a track number and so on are recorded in advance as data. In this embodiment, as shown in Fig. 2, there are recorded a sector mark 3a, a sector number 3b, a higher digit 3c of track number, a lower digit 3d of track number, a track number correcting signal (higher digit) 3e, a track number correcting signal (lower digit) 3f and a check code 3g in this order.

The recorded portion of the check code 3g is followed by a data read signal correcting area 3h which is distant from the check code 3g by one byte and on which an auxiliary synchronizing signal is recorded. The recording is carried out for the correcting area 3h when data is recorded on the data area 2b of the sector corresponding to this address area as will be described later.

Fig. 6 illustrates each servo area 2a in detail in which three pits P_{A}, P_{B} and P_{C} are formed, respectively. The pits P_{A} and P_{B} are vertically displaced from each other across the central line of the track formed on the above-mentioned disc 1. The pit P_{C} is formed on the central line of the track. The diameter of each of the pits P_{A}, P_{B} and P_{C} is in a range of about 0.5 to 1.0 µm and a practical length L of the servo area is in a range of about 15 to 30 µm in practice.

Fig. 7 shows the condition that the pits P_{A}, P_{B} and P_{C} are respectively aligned in the diametrical direction of the disc 1 (in the direction shown by arrows in Fig. 4). Each of the pits P_{B} and P_{C} is alinged in a linear fashion, while the pits P_{A} are aligned in such a manner that they are shifted back and forth in the longitudinal direction of the track at every 16 pits. The alignment in which the pits P_{A} are displaced at every 16 pits is used to carry out the counting operation for searching the track number of the track that is now being scanned by an optical pickup. The pit P_{A} is sampled by a sampling pulse SP₁ or sampling pulse SP₂, the respective pits P_{B} and P_{C} are sampled by sampling pulses SP₃ and SP₅ and the mirror surface region between the pits P_{B} and P_{C} is sampled by a sampling pulse SP₄ and they are thereby used to carry out various kinds of servo operations and to produce clocks which will be described later.

The recorded pattern on the magneto-optical disc in this embodiment is formed as described above, and data is recorded on this magneto-optical disc as follows.

Upon recording data, data is separated at every sector and recorded in the data area 2b of each of the above-mentioned tracks 2. At that time, clock signals are formed on the basis of the signals which result from sampling the pits P_{A}, P_{B} and P_{C} of the servo area 2a. In synchronism with the clock signal, a laser light is irradiated on the data area 2b to record data on the data area 2b. When the data is recorded on the data area 2b, a signal of a predetermined pattern containing an independent recording pattern is recorded in the data read signal correcting area 3h of the address area 3 of the sector to which the recorded data area 2b belongs as a sampling signal. The signal is recorded on the data read signal correcting area 3h by the irradiation of a laser light in synchronizm with the clock signal which results from sampling the above-mentioned servo area 2a. The irradiation conditions such as the output of the laser light and so on are selected to be the same as those under which the data is recorded on the data area 2b.

The arrangement and the operation of the reproducing apparatus which reads the recorded data from the thus recorded magneto-optical disc will be described next.

Fig. 1 is a diagram showing an arrangement of the reproducing apparatus of this embodiment. In the figure, reference numeral 11 designates a reproduced high frequency signal input terminal to which is supplied a high frequency signal which results from reproducing the above-mentioned magneto-optical disc 1. The reproduced high frequency signal applied to the input terminal 11 is supplied to an analog/digital converter (hereinafter, referred to as an A/D-converter) 12. The A/D-converter 12 is adapted to convert into a digital signal (pulse signal) the high frequency signal supplied thereto in synchronism with a data read clock signal which will be described later. The pulse signal from the A/D-converter 12 is supplied to a demodulator 13 which carries out a predtermined demodulation. The demodulated signal therefrom is supplied to a data processing circuit 14 and the data processing circuit 14 processes the reproduced data.

Then, the pulse signal from the A/D-converter 12 is supplied to first and second latch circuits 15 and 16. The latch circuits 15 and 16 are adapted to latch the pulse signal from the A/D-converter 12 at timings that are determined by latch signals derived from a timing generator 17. The thus latched pulse signals are supplied to an operational amplifier 19.

The timing generator 17 is supplied with a read portion detected signal that is detected by a sector counter 18 and the timing generator determines the output timings of the latch signals on the basis of the detected signal. The latch signal supplied to the first latch circuit 15 is used for a timing at which the pit forming portion signal of the servo area 2a is latched, while the latch signal supplied to the second latch circuit 16 is used for a timing at which the signal recorded portion of the data read signal correcting area 3h of the address area 3 is latched. The latched pulse signals derived from the first and second latch circuits 15 and 16 to which the latch signal is supplied as described above are supplied to a non-inverting input terminal and an inverting input terminal of the operational amplifier 19 which forms a comparator. This operational amplifier 19 compares a level difference between the signals supplied to both of the terminals thereof and supplies an output signal corresponding to the level difference to a delay time selecting signal input terminal of a variable delay line 20. The variable delay line 20 is adapted to delay a clock signal derived from a clock signal generator 21 by a predetermined delay time and supply the thus delayed clock signal to a switching circuit 22. The clock signal generator 21 produces a clock signal on the basis of a signal which results from sampling the servo area 2a (sampling the pits P_{A}, P_{B}, P_{C} or the like). The thus produced clock signal is supplied through the variable delay line 20 to the switching circuit 22 and is also directly supplied to the switching circuit 22 without being delayed. The switching circuit 22 is adapted to switch the thus delayed clock signal and the clock signal, which is not delayed, on the basis of the switching signal derived from the timing generator 17. The clock signal from the switching circuit 22 is supplied to the A/D converter 12 as the above-mentioned conversion clock signal. The switching signal from the timing generator 17 responds to the read portion detected signal detected by the sector counter 18 to cause the switching circuit to deliver the non-delayed clock signal when the read portion is the servo area 2a and also to cause the switching circuit to deliver the clock signal delayed by the delay line 20 when the read portion is the data area 2b.

With the above-mentioned arrangement, the clock signal supplied to the A/D converter 12 directly becomes the non-delayed clock signal that is derived from the clock generator 21 as it is when the read portion is the servo area 2a, while it becomes the signal delayed by the variable delay line 20 when the read portion is the data area 2b. The delay time of the delay line 20 is determined by the level difference signal detected by the operational amplifier 19. The signals compared by the operational amplifier 19 are in response to the latch operations of the latch circuits 15 and 16 the signal level when the pits on the digitised servo area 2a are reproduced in synchronism with the clock signal from the clock generator 21 and the signal level when the recorded signal on the data read signal correcting area 3h digitized in synchronism with the clock signal delayed by the variable delay line 20 is reproduced. Thus, when the operational amplifier 19 detects that both of the signal levels are equal, the data (digitized signal) of both the areas 2a and 3h are read excellently and the delay time of the variable delay line 20 is adjusted to be an optimum one. If there is a difference between both levels, the signal level when the recorded signal in the data read correcting signal area 3h is reproduced is low so that the delay time of the variable delay line 20 is changed by the supply of the level difference signal thereto so as to become equal to the signal level when the pits of the servo area 2a are reproduced. Incidentally, the delay time of the variable delay line 20 is adjusted once per, for example, one sector.

According to this reproducing apparatus, since the delay time of the delay line 20 is changed as described above, the recorded data in the data area 2b can be reproduced satisfactorily. In other words, the clock generator 21 generates a clock signal shown in Fig. 3B on the basis of the servo area 2a shown in Fig. 3A. Since this clock signal is directly used to read the signal in the servo area 2a owing to the above-mentioned operation, the phase thereof is always coincident with the phase of the signal that is used to read the pit of the servo area 2a. Further, the signal is recorded in the data read signal correcting area 3h at the same time as that of the data recording by the data recording apparatus different from the apparatus which forms the pit on this servo area 2a so that the phase of the data read signal correcting area 3h is displaced as shown in Fig. 3. With such a displacement, the signal cannot be read out satisfactorily by the clock signal shown in Fig. 3B. However, the delay time of the variable delay line 20 can be corrected by the level difference detection in the above-mentioned operational amplifier 19 so that as shown in Fig. 3C, the phase of the clock signal is adjusted so as to read the recorded signal of the data read signal correcting area 3h satisfactorily. Since the data recorded in the data area 2b following the data read signal correcting area 3h within the same sector is recorded under the same conditions by the same recording apparatus as that used to record the data read signal correcting area 3h, the signal can be read out under the optimum condition by the clock signal of which the phase is adjusted.

According to the optical recording/reproducing apparatus of this embodiment as described above, since the phase difference caused by the different recording conditions such as the recording apparatus, the recording medium or the like can be automatically adjusted by the signal that is recorded in the data read signal correcting area 3h as the sampling signal upon recording, the data can be always read under the optimum condition.

### EXPLANATION ON REFERENCE NUMERALS

Reference numeral 2a represents the servo area, 2b the data area, 3 the address area, 3h the data read signal correcting area, 12 the analog/digital-converter, 20 the variable delay line, and 21 the clock generator.

## Claims

1. An optical recording/reproducing apparatus for use with a recording medium (1) on which a synchronizing signal (2a) is recorded in advance in first areas (2a) and an auxiliary synchronizing signal (3h) may be recorded in second areas (2b) of the recording medium (1) by the same recording means which records data between said synchronizing signals (2a) characterised by a clock generator (21) whose clock signal is locked to said synchronizing signal (2a) read from the first areas and delay means (20) for adjusting the phase of said clock signal on the basis of said auxiliary synchronizing signal (3h) read from the second areas to generate a data read clock signal.

2. An optical recording/reproducing apparatus according to claim 1 wherein said auxiliary synchronizing signal (3h) is recorded on the basis of said synchronizing signal (2a).

3. An optical recording/reproducing apparatus according to claim 1 or 2, wherein a variable delay line (20) is controlled on the basis of said auxiliary synchronizing signal (3h) so as to generate said data read clock signal.

4. An optical recording/reproducing apparatus according to claim 3, wherein the delay time of said variable delay line (20) is controlled by a level difference between reproduced signals of said synchronizing signal and said auxiliary synchronizing signal.

5. An optical recording/reproducing apparatus according to any preceding claim, wherein said synchronizing signal (2a) is recorded in a servo area (2a) in advance and said auxiliary synchronizing signal (3h) is recorded in a data area (2b) between said servo areas (2a).

6. An optical recording/reproducing apparatus according to any preceding claim wherein said auxiliary synchronizing signal (3h) is magneto-optically recorded similarly to data (2b) to be recorded.

## Patentansprüche

1. Optische Aufzeichnungs- und Wiedergabevorrichtung zur Verwendung mit einem Aufzeichnungsmedium (1), auf dem ein Synchronisationssignal (2a) vorher in ersten Bereichen (2a) aufgezeichnet ist und ein Hilfssynchronisationssignal (3h) in zweiten Bereichen (2b) des Aufzeichnungsmediums (1) durch die gleichen Aufzeichnungsmittel aufgezeichnet werden kann, die Daten zwischen den Synchronisationssignalen (2a) aufzeichnen,
**gekennzeichnet durch**
einen Taktgenerator (21), dessen Taktsignal mit dem Synchronisationssignal (2a) verriegelt ist, das von den ersten Bereichen gelesen wird und Verzögerungsmittel (20) zum Einstellen der Phase des Taktsignals auf der Grundlage des Hilfssynchronisationssignals (3h), das von den zweiten Bereichen gelesen wird, um ein Datenlesetaktsignal zu erzeugen.

2. Optische Aufzeichnungs- und Wiedergabevorrichtung nach Anspruch 1, wobei das Hilfssynchronisationssignal (3h) auf der Grundlage des Synchronisationssignals (2a) aufgezeichnet wird.

3. Optische Aufzeichnungs- und Wiedergabevorrichtung nach Anspruch 1 oder 2, wobei eine variable Verzögerungsstrecke (20) auf der Grundlage des Hilfssynchronisationssignals (3h) gesteuert wird, um so das Datenlesetaktsignal zu erzeugen.

4. Optische Aufzeichnungs- und Wiedergabevorrichtung nach Anspruch 3, wobei die Verzögerungszeit der variablen Verzögerungsstrecke (20) durch eine Pegeldifferenz zwischen den reproduzierten Signalen des Synchronisationssignals und des Hilfssynchronisationssignals gesteuert wird.

5. Optische Aufzeichnungs- und Wiedergabevorrichtung nach einem der vorherigen Ansprüche, wobei das Synchronisationssignal (2a) vorher im Servobereich (2a) aufgezeichnet wird und das Hilfssynchronisationssignal (3h) in einem Datenbereich (2b) zwischen den Servorbereichen (2a) aufgezeichnet wird.

6. Optische Aufzeichnungs- und Wiedergabevorrichtung nach einem der vorherigen Ansprüche, wobei das Hilfssynchronisationssignal (3h) magnetooptisch in ähnlicher Weise wie die aufgezeichneten Daten (2b) aufgezeichnet wird.

## Revendications

1. Appareil de reproduction et d'enregistrement optique à utiliser avec un support d'enregistrement (1) sur lequel un signal de synchronisation (2a) a été enregistré par avance dans une première zone (2a) et un signal de synchronisation auxiliaire (3h) peut être enregistré dans une seconde zone (2b) du support d'enregistrement (1) par le même dispositif d'enregistrement qui enregistre les données entre lesdits signaux de synchronisation (2a) caractérisé par un générateur d'horloge (21) dont le signal d'horloge est verrouillé par ledit signal de synchronisation (2a) lu sur la première zone et un dispositif à retard (20) pour retarder la phase dudit signal d'horloge sur la base dudit signal de synchronisation auxiliaire (3h) lu sur la seconde zone pour générer un signal d'horloge de lecture de données.

2. Appareil d'enregistrement/reproduction optique selon la revendication 1 dans lequel ledit signal de synchronisation auxiliaire (3h) est enregistré sur la base dudit signal de synchronisation (2a).

3. Appareil d'enregistrement/reproduction optique selon la revendication 1 ou 2, dans lequel une ligne à retard variable (20) est commandée sur la base dudit signal de synchronisation auxiliaire (3h) afin de générer ledit signal d'horloge de lecture de données.

4. Appareil d'enregistrement/reproduction optique selon la revendication 3, dans lequel le retard de ladite ligne à retard variable (20) est commandé par une différence de niveau entre les signaux reproduits dudit signal de synchronisation et dudit signal de synchronisation auxiliaire.

5. Appareil d'enregistrement/reproduction optique selon l'une quelconque des revendications précédentes, dans lequel ledit signal de synchronisation (2a) est enregistré par avance dans une zone (2a) et ledit signal de synchronisation auxiliaire (3h) est enregistré dans une zone de données (2b) entre lesdites zones d'asservissement (2a).

6. Appareil d'enregistrement/reproduction optique selon l'une quelconque des revendications précédentes dans lequel ledit signal de synchronisation auxiliaire (3h) est enregistré de façon magnéto-optique de manière similaire aux données (2b) à enregistrer.
